# EUROPÄISCHE PATENTANMELDUNG

(11) **EP 2 937 246 A1**
(43) Veröffentlichungstag der Anmeldung: **28.10.2015**
(21) Anmeldenummer: 15001180.7
(22) Anmeldetag: 21.04.2015
(51) Int. Cl.: B60R 13/00

(54) **EMBLEMTRÄGER**

(30) Priorität: 25.04.2014 AT 2992014
(71) Anmelder: Ulbrichts Witwe GmbH, 4690 Schwanenstadt (AT)
(72) Erfinder: Becksteiner, Daniel, 4656 Kirchham (AT); Scharpenack, Georg, 4813 Altmuenster (AT)
(74) Vertreter: Gangl, Markus

(57) **Zusammenfassung**

Emblemträger (1), mit:
a. einer Grundplatte (2), über welche der Emblemträger (1) an einem Untergrund befestigbar ist,
b. einem Präsentationskörper (3), welcher als Emblem ausgebildet ist oder zur Anordnung eines Emblems dient,
wobei der Präsentationskörper (3) und die Grundplatte (2) über eine Verklipsung aneinander befestigt sind, die eine Mehrzahl von Haken (4) und eine Vielzahl von Ausnehmungen (5) aufweist, wobei im verklipsten Zustand ein Haken (4) in eine Ausnehmung (5) hinein ragt und ein Kopfteil (6) dieses Hakens (4) die Ausnehmung (5) hintergreift, wobei ein die Ausnehmung (5) teilweise abdeckender federnder Bügel (7) vorgesehen ist, der beim Einbringen des Hakens (4) in die Ausnehmung (5) dem Kopfteil (6) des Hakens (4) ausweicht.

## Beschreibung

Die Erfindung betrifft einen Emblemträger mit den Merkmalen des Oberbegriffs des Anspruchs 1.

Problematisch ist beim Stand der Technik, dass es häufig beim Einbringen der Haken in die Ausnehmungen zu einem Abscheren des Kopfteils eines oder mehrerer Haken kommt, wodurch keine sichere Verklipsung von Grundplatte und Präsentationskörper mehr erzielbar ist.

Vor allem - aber nicht nur - beim Einsatz von Polymethylmethacrylat (PMMA) als Material der Grundplatte tritt dieses Problem auf, da PMMA hart und spröde ist.

Aufgabe der Erfindung ist die Bereitstellung eines gattungsgemäßen Emblemträgers, bei dem dieses Problem nicht auftritt.

Diese Aufgabe wird durch einen Emblemträger mit den Merkmalen des Anspruchs 1 gelöst.

Vorteilhafte Ausführungsformen der Erfindung sind in den abhängigen Ansprüchen definiert.

Unter "Embleme" werden insbesondere Bilder, Logos, Firmen- oder Warenzeichen, alphanumerische Zeichen oder Zeichenkombinationen, oder Codes verstanden.

Durch den vorzugsweise an der Grundplatte angeordneten, die Ausnehmung radial von einer Seite des Umfanges der Ausnhemung her teilweise abdeckenden, vorzugsweise zungenförmigen federnden Bügel, kann der freie Bereich der Ausnehmung beim Einbringen des Kopfteils des Hakens durch ein Ausweichen des Bügels in die Tiefenerstreckung der Ausnehmung hinein, also in Richtung einer Rückseite der Grundplatte so vergrößert werden, dass ein Abscheren des Kopfteils des Hakens auch bei Verwendung eines sehr harten und spröden Materials für die Grundplatte vermieden wird. Andererseits ist der freie Bereich der Ausnehmung nach erfolgter Einbringung des Kopfteils des Hakens durch den zumindest teilweise wieder in seine Ausgangsstellung zurück bewegten Bügel klein genug, dass ein Herauswandern des Hakens aus der Ausnehmung sicher verhindert wird.

Besonders bevorzugt ist vorgesehen, dass die Mehrzahl von Haken am Präsentationskörper und die Vielzahl von Ausnehmungen an der Grundplatte angeordnet sind. Der bzw. die Haken sind vorzugsweise einstückig mit dem Präsentationskörper ausgebildet. Der bzw. die federnde(n) Bügel ist bzw. sind vorzugsweise einstückig mit dem Grundkörper ausgebildet.

Bevorzugt sind ebenso viele Ausnehmungen wie Haken vorgesehen. Dies ist allerdings nicht unbedingt erforderlich. Zum Beispiel kann es aus produktionstechnischen Gründen vorteilhaft sein, Grundkörper mit einer festen Anzahl von Ausnehmungen herzustellen, die mit unterschiedlichen Präsentationskörpern, die ggf. unterschiedlich viele Haken aufweisen, verwendet werden. In diesem Fall werden ggf. einige der Ausnehmungen im Zustand der Verklipsung leer bleiben, es ragen also keine Haken in diese Ausnehmungen hinein.

Vorzugsweise sind alle Ausnehmungen mit dem oben beschriebenen Bügel versehen. Dies ist allerdings nicht unbedingt erforderlich.

Ein zerstörungsfreies Lösen der Verklipsung ist beim erfindungsgemäßen Emblemträger nur schwer, wenn überhaupt möglich.

Besonders bevorzugt ist vorgesehen, dass der Kopfteil des Hakens durch den Bügel im verklipsten Zustand gegen die Ausnehmung gepresst wird. So wird eine noch bessere Verriegelung des Hakens an der Grundplatte erreicht. Zu diesem Zweck kann auch noch vorgesehen sein, eine dem Bügel zugewandte Seite des Hakens mit einer aufgerauten oder abgestuften Oberfläche zu versehen, sodass die Verkantung zwischen Bügel und Haken verstärkt wird.

Die Haken können zum Beispiel an einem Umfangsrand und/oder einem zentralen Bereich des Präsentationskörpers angeordnet sein.

Der Präsentationskörper kann zum Beispiel aus ABS, PMMA, PA, ASA oder andere Kunststoffe (vorzugsweise verchromt) bestehen.

Die Grundplatte kann zum Beispiel aus PMMA, ABS, PA, ASA oder andere Kunststoffe bestehen. Alternativ oder zusätzlich können in der Grundplatte Öffnungen zur Aufnahme von Schrauben oder dergleichen vorgesehen sein.

Die Grundplatte kann an ihrer Rückseite mit einer Klebeschicht zur Befestigung an einem Untergrund versehen sein.

Der Emblemträger kann zur Befestigung an der Karosserie, zum Beispiel der Motorhaube, eines KFZ (Kraftfahrzeug) oder anderen Teilen eines KFZ vorgesehen und ausgebildet sein.

Schutz wird auch begehrt für die Verwendung eines Emblemträgers nach wenigstens einem der oben diskutierten Ausführungsbeispiele, zur Anordnung eines Emblems an einem KFZ, vorzugsweise an der Karosserie eines KFZ.

Weitere Vorteile und Einzelheiten der Erfindung ergeben sich anhand der Figuren und der dazu gehörigen Figurenbeschreibung. Es zeigen:
- Fig. 1: in einer perspektivischen Ansicht ein Ausführungsbeispiel eines erfindungsgemäßen Emblemträgers,
- Fig. 2: eine Draufsicht auf die Grundplatte und
- Fig. 3: in einer Detaildarstellung einen Bereich des Emblemträgers nach Fig. 1, wobei sich Präsentationskörper und Grundplatte im Zustand der Verklipsung befinden.

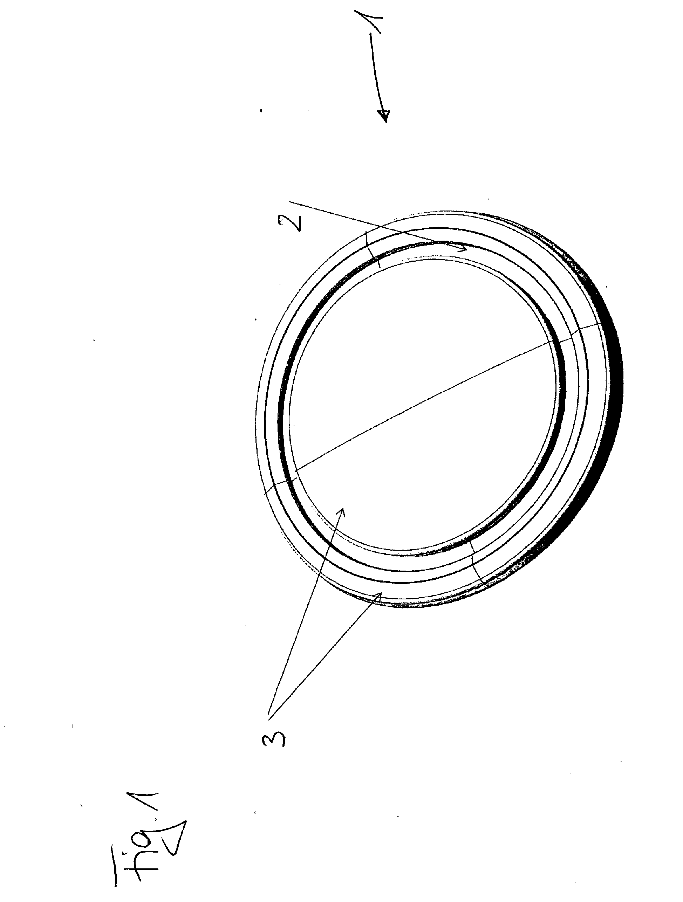

Figur 1 zeigt einen Emblemträger 1 mit einem Präsentationskörper 3, der hier blank dargestellt ist, aber als Emblem (zum Beispiel als Markenzeichen) ausgebildet sein kann oder ein Emblem tragen kann.

Der Präsentationskörper 3 ist mit einer Grundplatte 2 zu verklipsen, die in diesem Ausführungsbeispiel eine Klebeschicht 9 trägt. Über die Klebeschicht 9 kann der Emblemträger 1 an einem geeigneten Untergrund befestigt werden.

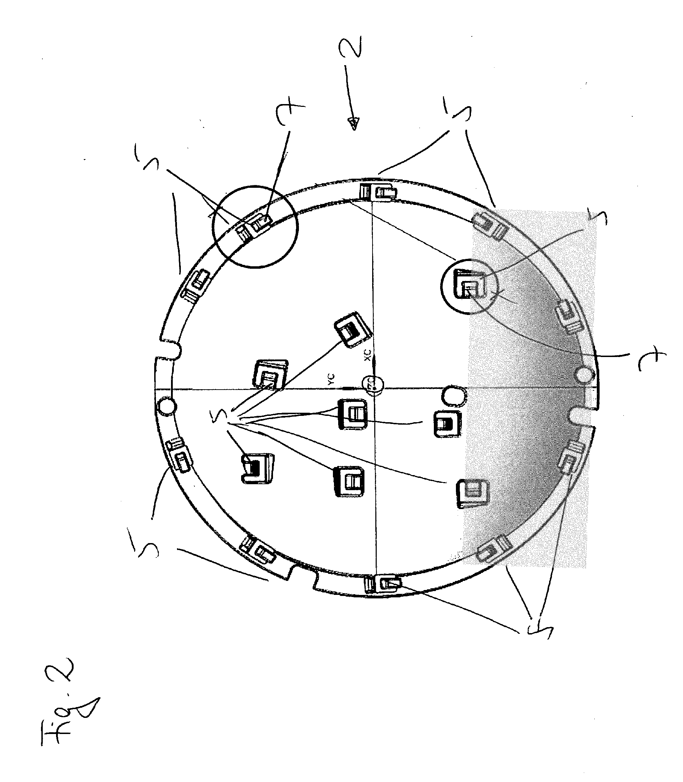

Figur 2 zeigt die Grundplatte 2, die mit einer Vielzahl von Ausnehmungen 5 versehen ist. Ein Teil der Ausnehmungen 5 ist an einem Umfangsrand der Grundplatte 2 angeordnet und kann entsprechend am Umfangsrang des Präsentationskörpers 3 angeordnete Haken 4 aufnehmen. Ein anderer Teil der Ausnehmungen 5 kann an einem zentralen Bereich der Grundplatte 2 angeordnet sein und entsprechend an einem zentralen Bereich des Präsentationskörpers 3 angeordnete Haken 4 aufnehmen.

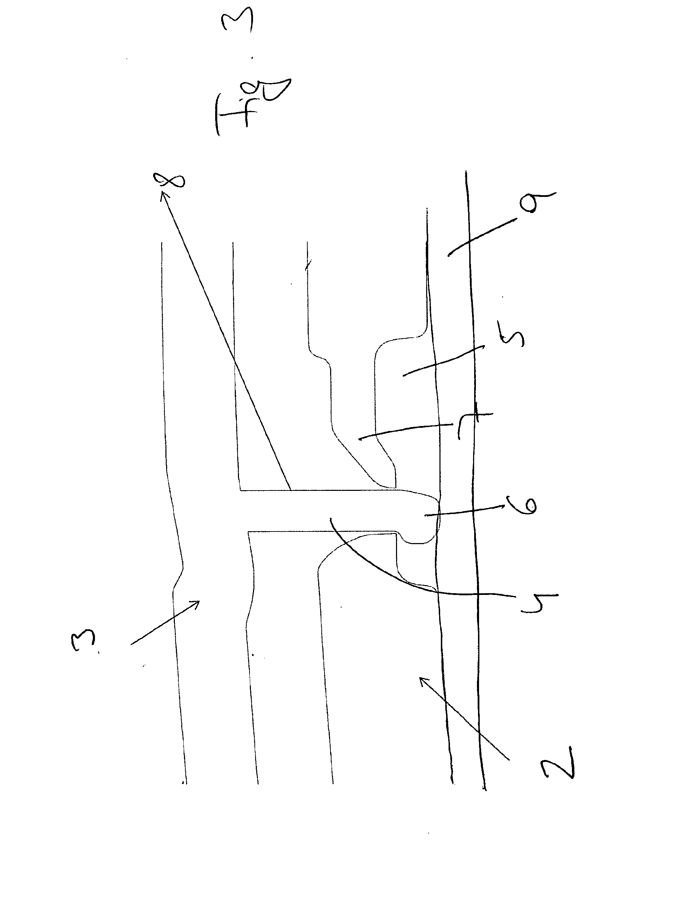

Figur 3 zeigt repräsentativ eine der Ausnehmungen 5, die in der Grundplatte 2 angeordnet sind. In die Ausnehmung 5 hinein ragt ein zungenförmig ausgebildeter, federnder Bügel 7 und deckt diese teilweise ab. Beim Einbringen des am Präsentationskörper 3 angeordneten Hakens 4 drückt dessen Kopfteil 6 den Bügel 7 in Richtung der Rückseite der Grundplatte etwas aus dem Weg, was aufgrund der federnden Ausbildung des Bügels 7 möglich ist. Hat der Kopfteil 6 die Grundplatte 2 hintergriffen, ist also der Zustand der Verklipsung hergestellt, kehrt der Bügel 7 in diesem Ausführungsbeispiel allerdings nicht vollständig in seine Ausgangsstellung zurück, sondern presst den Kopfteil 6 des Hakens 4 etwas gegen die Grundplatte 2.

## Patentansprüche

1. Emblemträger (1), mit:
- einer Grundplatte (2), über welche der Emblemträger (1) an einem Untergrund befestigbar ist,
- einem Präsentationskörper (3), welcher als Emblem ausgebildet ist oder zur Anordnung eines Emblems dient,
wobei der Präsentationskörper (3) und die Grundplatte (2) über eine Verklipsung aneinander befestigt sind, die eine Mehrzahl von Haken (4) und eine Vielzahl von Ausnehmungen (5) aufweist, wobei im verklipsten Zustand ein Haken (4) in eine Ausnehmung (5) hinein ragt und ein Kopfteil (6) dieses Hakens (4) die Ausnehmung (5) hintergreift,
**dadurch gekennzeichnet, dass**
ein die Ausnehmung (5) teilweise abdeckender federnder Bügel (7) vorgesehen ist, der beim Einbringen des Hakens (4) in die Ausnehmung (5) dem Kopfteil (6) des Hakens (4) ausweicht.

2. Emblemträger (1) nach Anspruch 1, **dadurch gekennzeichnet, dass** die Mehrzahl von Haken (4) am Präsentationskörper (3) und die Vielzahl von Ausnehmungen (5) an der Grundplatte (2) angeordnet sind.

3. Emblemträger (1) nach Anspruch 1 oder 2, **dadurch gekennzeichnet, dass** der Kopfteil (6) des Hakens (4) durch den Bügel (7) im verklipsten Zustand gegen die Ausnehmung (5) gepresst wird.

4. Emblemträger (1) nach Anspruch 3, **dadurch gekennzeichnet, dass** eine dem Bügel (7) zugewandte Seite (8) des Hakens (4) mit einer aufgerauten oder abgestuften Oberfläche versehen ist.

5. Emblemträger (1) nach wenigstens einem der Ansprüche 1 bis 4, **dadurch gekennzeichnet, dass** zumindest einer der Haken (4) an einem Umfangsrand des Präsentationskörpers (3) angeordnet ist.

6. Emblemträger (1) nach wenigstens einem der Ansprüche 1 bis 5, **dadurch gekennzeichnet, dass** zumindest einer der Haken (4) an einem zentralen Bereich des Präsentationskörpers (3) angeordnet ist.

7. Emblemträger (1) nach wenigstens einem der Ansprüche 1 bis 6, **dadurch gekennzeichnet, dass** die Grundplatte (2) mit einer Klebeschicht (9) versehen ist.

8. Emblemträger (1) nach wenigstens einem der Ansprüche 1 bis 7, **dadurch gekennzeichnet, dass** an der Grundplatte (2) Öffnungen zur Aufnahme von Schrauben oder dergleichen vorgesehen sind.

9. Verwendung eines Emblemträgers (1) nach wenigstens einem der Ansprüche 1 bis 8, zur Anordnung eines Emblems an einem KFZ, vorzugsweise an der Karosserie eines KFZ.
